(19) Europäisches Patentamt
European Patent Office
Office européen des brevets

(11) **EP 2 104 433 B1**

(12) **EUROPEAN PATENT SPECIFICATION**

(45) Date of publication and mention
of the grant of the patent:
**25.04.2012 Bulletin 2012/17**

(51) Int Cl.:
***A23J 3/08*** (2006.01)

(21) Application number: **07804218.1**

(22) Date of filing: **12.09.2007**

(86) International application number:
**PCT/GB2007/003420**

(87) International publication number:
**WO 2008/032039 (20.03.2008 Gazette 2008/12)**

(54) **PROTEIN DENATURATION CONTROL**

PROTEINDENATURIERUNGSKONTROLLE

SUIVI DE LA DÉNATURATION

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **13.09.2006 GB 0617978**

(43) Date of publication of application:
**30.09.2009 Bulletin 2009/40**

(73) Proprietor: **Nandi Proteins Limited**
**Edinburgh**
**Midlothian EH2 3ES (GB)**

(72) Inventor: **CAMPBELL, Lydia, Johanna**
**Kinross KY13 9YE (GB)**

(74) Representative: **McNab, Donald C.**
**Marks & Clerk LLP**
**Aurora**
**120 Bothwell Street**
**Glasgow**
**G2 7JS (GB)**

(56) References cited:
**WO-A-02/49442        WO-A-02/071050**
**WO-A-2006/034857    US-B1- 6 767 575**

**Description**

The present invention relates to the heat treatment of protein solutions, and more particularly to controlling the denaturation degree and particle size of the heated protein solutions.

The heat treatment of globular protein solutions such as egg white, soy and whey proteins is relatively widespread in the food industry, and has been used for a variety of purposes over the years. Such treatment generally involves more or less extensive heat treatment, which often results in complete denaturation of the protein molecules, with extensive aggregation of the proteins resulting in the formation of large aggregates in the case of more dilute solutions and gelation in the case of more concentrated solutions. Indeed, various procedures for the preparation of whey protein aggregates from sweet and acid whey with sizes ranging in 0.1-10 $\mu$m have been the subject of many patent applications in the past 10 years. A summary of various prior art processes can be found in US patent no. 6,767,575. The significance of various different variables such as heating temperatures, holding times, pH-values and different heating procedures is discussed. None of these prior disclosures describes the manufacture of whey protein aggregates from a whey protein solution having a protein concentration >15% per weight of water, i.e. a protein concentration of more than 15 g per 100 g of solution. Heat treatment of liquid whey at protein concentrations >15% presents a particular problem as it often leads to uncontrolled gelation. On the other hand, dilution of the liquid whey to protein concentrations <15% requires evaporation after heat denaturation to 15-28% protein (corresponding to 25-30% total solids (TS)), in order to enable economical spray-drying, which adds considerably to the processing costs.

In general the control of the denaturation has not been very effective due to the lack of suitable methods for monitoring the degree of denaturation during commercial processing, and somewhat limited understanding of the various processes involved in heat-induced denaturation of globular proteins, and in particular the significance of the initial formation (including exposure) of reactive -SH groups and the reaction of these in subsequent aggregation processes.

US patent no. 6,767,575 states that " The control of the inventive process achieved by setting the degree of denaturation represents the significant difference between the inventive process and the processes known to those skilled in the art". And furthermore: " If the heat denaturation is not carried out in a controlled manner, even very small variations in the composition of the starting materials, for example different contents of the protein fractions present in the starting solution, for instance milk or whey, in the pH of the starting solution and similar mean that the desired content of denatured (whey) protein aggregates is not achieved. As a result, the product obtained does not then have the desired properties and cannot be used for the intended purpose."

Measurement of denaturation degree in accordance with this patent is laborious and time-consuming and will have a duration of at least 30 minutes to complete: First the denatured protein is precipitated by adding acid to pH 4.6 followed by filtration; the filtered solution is analysed by reverse phase HPLC chromatography and the degree of denaturation is calculated via the ratio of peak areas of the heat treated and non-heated sample. This is clearly impractical in the context of any commercial production process, given that often a change of only one or two °C in the processing temperature can make the difference between satisfactory treatment and catastrophic gelation, and that relatively large volumes of fluid (typically tens or hundreds of litres), may be passed through the heating section of the production plant, during each minute of operation.

Various other methods of measuring denaturation degree are also known, all of which suffer from significant disadvantages:

Differential scanning calorimetry (DSC):

Disadvantages:

- Duration of measurements: at least 30 minutes;
- Does not differentiate between particle sizes;
- Does not differentiate between soluble and insoluble aggregates.

Hydrophobicity:

Disadvantages:

- Limited sensitivity;
- Does not differentiate particle size.

Circular dichroism (CD)

Disadvantages:

- Sample needs to be flushed with nitrogen during analysis;
- Duration: since protein solution has to be scanned, duration of analysis lasts 30 minutes to 1 hour;
- Like DSC, SH-groups determination, and hydrophobicity it only measures degree of denaturation and does not measure particle or aggregate size.

Gel permeation chromatography

Disadvantages:

- Duration of analysis: at least 10 minutes;
- Requires complex equipment in processing plant. Spectroscopy: Absorbance at 600 nm

Disadvantages:

- Does not differentiate particle size;
- Limited sensitivity.

Gel Electrophoresis

Disadvantages:

- Duration: 5-24 hours;

- Insensitive.

As described in WO0249442, the present Inventor has recently found that, by means of a carefully controlled thermal induced denaturation of globular protein solutions, it is possible to obtain new protein-based products with valuable properties significantly different from those obtainable by previously known thermal treatment processes. In more detail, the Inventor has found that, in order to provide an effective limitation of the heat treatment process, it is necessary to monitor the quantity of reactive -SH groups. In order, however, to facilitate the most effective commercial utilization of such a process, which in practice would generally involve continuous flow processing of very large volumes (typically thousands of litres), there is a need for providing a quick and simple means of effectively monitoring the quantity of reactive -SH groups formed in the heat treatment process, and the aggregation of the denatured protein molecules resulting from the reaction of these reactive -SH groups in the course of the heat treatment process, in order to allow an effective, more or less real-time, controlling of the heat treatment process. Major practical problems which can often be encountered in heat treatment of protein solutions, in the absence of such careful controlling of the thermal treatment process, include blockages of the process lines by gelation (i.e. substantially complete "solidification" of the protein solution) or accumulations of precipitated aggregates, and burning on of such aggregates on heat exchange surfaces, which can result in substantial or complete loss of processed material, and substantial production apparatus downtime for cleaning and repair. It will also be appreciated that with any processing involving natural products (such as whey protein materials), there may be encountered very considerable variations in the properties of the solution (such as protein concentration, TS content, pH, ionic strength, etc) to be processed, which can significantly affect the processing conditions (such as temperature, treatment time etc), which may be required to achieve the degree of processing needed to obtain a particular desired quality or property in the process product. Furthermore, it is also often the case that when suitable conditions are found in laboratory and small-scale trials of production processes for producing heat treated proteins with specific functional properties, considerable difficulties are encountered in up-scaling of the process to industrial scale whilst maintaining the desired functional properties. This is due to inter alia changes in heat transfer properties upon changing the proportions of thermal processing equipment.

One analytical technique that has been used for monitoring the presence of aggregates in protein solutions is the measurement of turbidity. In practice though, commercial heat treatment processes are generally carried out on relatively dilute protein concentrations (5-10% (w/v)) to avoid gelation. It is of considerable economical advantage, if heat treatment could be carried out safely at more concentrated protein solutions, which may typically contain of the order of 15 to 28% w/v protein, which is equivalent to 20-30% w/v TS (Total Solids) (depending on the particular source or type of the protein material), to avoid an additional processing step requirement of evaporation before spray-drying. With such concentrated solutions, it is not possible to obtain accurate turbidity measurements, and it is necessary to dilute substantially the sample solution in order to enable turbidity measurements to be obtained which are sufficiently accurate to provide practically useful indications of the level of aggregation and aggregate particle size, before attempting to measure the turbidity. Such dilution results, however, in substantial changes in pH and ionic strength, which can considerably affect the behaviour of the protein molecules and change the aggregation thereof, thereby resulting in substantial distortion of any turbidity measurements. Another problem with turbidity measurements in such cases is that even relatively small aggregates may precipitate out of solution (especially a substantially diluted solution) so quickly that it is not possible to capture an accurate and meaningful turbidity measurement.

It is an object of the present invention to avoid or minimize one or more of the disadvantages or problems described herein.

It has now been found by the present Inventor, that, by means of a more or less highly sensitive.method of determining the turbidity of the heat treated protein solution, which can be well correlated with the size of the aggregates formed by the denatured protein molecules, and the measurement of the degree of denaturation of the proteins by means the degree of reactive -SH group formation in the denatured protein molecules, aggregates of desired size and functionality can be manufactured from liquid whey streams with protein concentrations of up to 28% w/v or up to 30% TS, with high reliability and reproducibility, thereby providing a very useful and practical method for effective quality control during commercial processing.

In one aspect the invention provides a method for monitoring the degree of protein denaturation and aggregation during the course of a heat treatment process comprising the steps of: heating an aqueous protein-containing fluid to a temperature corresponding to a heat treatment intensity in proximity to a previously established expected heat treatment intensity; collecting a sample of the heated protein solution; diluting said sample(s) in a buffer formulated so that:

the pH in said sample is substantially unchanged,
the ionic conditions in said sample are substantially unchanged, and
the viscosity of said sample is at least substantially maintained, all relative to the undiluted sample,
measuring the turbidity of said sample relative to an untreated control sample;
comparing the turbidity measurement obtained with previously established turbidity measurement limits corresponding to a desired average protein aggregate size range;
collecting a sample of the heated protein solution;
mixing said sample(s) with a chemical -SH group reaction measurement system; and
comparing the SH-group measurement obtained with previously established SH-group measurement limits corresponding to a desired degree of denaturation.

In a further aspect the present invention provides a method of controlling heat treatment intensity for aqueous protein solutions so as to produce heat denatured protein aggregates of desired particle size and functionality comprising the steps of:

heating the protein solution to a temperature corresponding to a heat treatment intensity in proximity to a previously established expected heat treatment intensity;
collecting a sample of the heated protein solution;
diluting said sample(s) in a buffer formulated so that:

the pH in said sample is substantially unchanged,
the ionic conditions in said sample are substantially unchanged, and
the viscosity of said sample is at least substantially maintained, all relative to the undiluted sample,
measuring the turbidity of said sample relative to an untreated control sample;
comparing the turbidity measurement obtained with previously established turbidity measurement limits corresponding to a desired average protein aggregate size range;
collecting a sample of the heated protein solution;
mixing said sample(s) with a chemical -SH group reaction measurement system;
comparing the SH-group measurement obtained with previously established SH-group measurement limits corresponding to a desired degree of denaturation; and
in the event of any deviations from the desired particle size and degree of denaturation, adjusting the heat treatment intensity so as to conform these to the desired value(s).

Thus the present invention can be used to control heat treatment intensity in relation to one or more of establishing of this for a process for a new product, a process for an existing product when a new batch of starting material (process fluid) is used, and/or for monitoring a process in the course of a single production run in case there might be any unexpected deviations for any reason, in the process conditions or parameters, in order that the heat treatment intensity can be adjusted so as to counteract such deviations.

In the case where the method is used for establishing heat treatment intensity, then the protein solution would initially be heated to a temperature (preferably at a small offset) below a previously established expected heat treatment intensity, and the method would include the steps of:

incrementing the heat treatment intensity, and repeating the preceding steps for each heat treatment intensity increment ;

and

discontinuing said heat treatment intensity incrementation when said comparisons indicate that:

both denaturation degree and turbidity measurements are within the desired range.

Typically this offset would be such that the protein solution is heated to about 5 °C below a previously established heat treatment intensity, e.g heated to below about 3 °C, or 2 °C below a previously established heat treatment intensity, and the heat treatment intensity increased so as to increase, or decrease, the temperature of the protein solution of increments of about 0.5 to 1 °C.

When the method is used for monitoring a process during the course of running thereof, then the protein solution would be heated to a temperature in substantially direct proximity to a previously established heat treatment intensity.

With a process of the present invention, it is typically possible to collect and process a sample, within less than 5 minutes, for example within less than 2 minutes, preferably less than one minute, e.g. less than 30 seconds, thereby permitting a rapid detection of the level of protein aggregation and a protein aggregate size, and degree of denaturation, thereby allowing, on the one hand the heat treatment intensity to be incremented relatively rapidly towards the intensity required for obtaining a product with the desired degree of denaturation, and a desired average protein aggregate size range, thereby minimizing waste of sub-optimal product, and on the other hand, providing rapid advance warning of close approach to a heat treatment intensity which would result in gelation of the protein solution or excessive aggregation and precipitation, which can result in more or less severe processing plant disruption. Moreover, the above measurements can readily be made with the use relatively simple processing and compact instrumentation, which can be readily integrated into a production plant environment.

The present invention also considerably facilitates the heat treatment of protein solutions with protein concentrations >15% w/v which is, from an economic point of view, significantly more advantageous than heat treatment of solutions <15% w/v, but is often avoided in practice because of the significant risks of disruption of the production process and plant associated therewith.

In relation to the controlling of the heat treatment intensity in the heat treatment process, it will of course be appreciated that the effective heat treatment intensity can be changed in various different ways including inter alia adjustment of the energy input to the heater, suitable modulation of any heat exchange or heat transfer system used to transfer heat from the heater to the protein solution, and changing the duration of the heat treatment (via adjustment of the flow rate of the protein solution through the heat treatment zone in the case of a continuous flow process). In certain embodiments of the invention heat treatment is effected by steam injection. Typically, by steam injection, the maximum temperature of heat treatment of the aqueous phase is up to 200°C.

It will be appreciated that the degree of denaturation, and protein aggregate size range, will also be affected by different forms of heat treatment intensity change. Thus whilst it will generally be more convenient to use a generally constant heat treatment period (corresponding to a constant protein solution flow rate in a continuous flow process), the present invention can also be used in controlling heat treatment processes where the heat treatment temperature is kept substantially constant, and the heat treatment period is progressively incremented towards the required operating level.

It will also be understood that whilst the method of the present invention is especially convenient for use in controlling continuous flow production processes, it can also be useful in setting up batch production processes.

In connection with the above, it will be appreciated that in the context of the present invention, the term "protein solution" indicates/is intended to encompass aqueous fluids in which the protein is substantially completely dissolved. Examples of typical fluids include aqueous solutions, dispersions and suspensions of proteins.

In relation to the measurement of the degree of denaturation, it is important to measure the amount of -SH groups which are actually reactive i.e. available for chemical reaction, which requires the use of a chemical reaction system wherein the level of reactive groups is indicated by the extent of reaction with the chemical reaction system, which can be readily measured e.g. by means of spectrophotometric measurements. One such suitable chemical -SH group reaction measurement system has been described by Shimada, K., Cheftel, J. C. (1988) "Determination of sulfhydryl groups and disulfide bonds in heat-induced gels of soy protein isolate" Journal of Agriculture and Food Chemistry, 36, 147-153. In the case of this system it may be noted that a protein concentration of 0.5-1 g/50 ml gives a linear range of absorption reading at 412 nm, and it is therefore desirable that when this chemical reaction system is added to the sample, the protein concentration in the resulting mixture should be of the order of 1 to 2% w/v. Depending on the protein concentration in the original sample, this may require a greater or lesser degree of dilution. This can conveniently be achieved by formulating the chemical reaction system which is added so that when it is mixed with the sample, the protein concentration is effectively diluted to the desired concentration. Nevertheless it would also be possible to use a separate dilution solution.

It will be understood that whilst various heat treatment denatured protein products will generally have a desired degree of denaturation corresponding to a reactive -SH group level of the order of 50 to 100 % (relative to a non-thermally denatured control sample, which represents 0% denaturation and relative to a fully (100%) denatured why protein control in which the buried SH groups are completely exposed, prior to the onset of gelation), different heat treatment denatured protein products may have a significantly greater variation in desired protein aggregate size range. This in turn may affect the degree of sample dilution required in order to obtain sufficiently accurate turbidity level measurements. In general, there should be used a degree of dilution so that the turbidity levels corresponding to the desired average protein aggregate size range, should not exceed 10000 NTU (nephelometric turbidity units), preferably not more than 6000 NTU. It will of course be appreciated that the turbidity levels obtained will depend to a significant extent on the protein concentration in the protein solution and that accordingly, the degree of dilution required will also generally be related to the original protein concentration, and accordingly could also be related to a desired protein concentration level in the diluted solution. Typically this would be less than 1% w/v, preferably not less than 0.1% w/v, desirably in the range from 0.2 to 0.6% w/v. In practice this would generally involve the use of dilutions of the order of from 10 to 100 times for 15-30% TS whey, and 0 to 10 times for 5 to 15% TS whey. (5 to 15% TS why typically has a protein concentration of about 50 to 90 %).

Various protein solution-compatible buffers are well known in the art for maintaining pH and ionic strength. Preferably the buffer does not give rise to a pH change of more than about $\pm$ 0.5, e.g. less than about $\pm$ 0.3. With regard to the ionic conditions, these preferably remain relatively constant upon affition of the buffer, for example vary less than about $\pm$ 0.1 micromolar, e.g. less than about $\pm$ 0.05 micromolar.

In relation to viscosity, it will be understood that particle sedimentation rate increases significantly with increased aggregate particle size whereby a substantial proportion of the particles may be removed from the sample solution before the turbidity measurement can be completed, thereby adversely affecting the validity of the measurement. Accordingly, it will generally be necessary to control the viscosity of the sample solution to a greater or lesser degree, and more particularly, so that the sedimentation time of the largest size aggregate particles expected in the process conditions of interest, should not be less than 1 minute, preferably not less than 5 minutes. Generally the viscosity of the diluted sample is within about $\pm$0.5 cP of the undiluted sample, e.g. within about 0.3 cP. Suitable viscosity conditions may be readily determined as will now be explained with reference to a largest aggregate particle size of 100 $\mu$m.

Formulae used to calculate sedimentation of particles are based on Stoke's law which is formulated to determine the size of spherical particles by measuring the time required for the particles to settle a known distance in fluid of known viscosity and density. One formula used to calculate the distance that particles with size ranging from 0.1-100 $\mu$m would travel is as follows:

$$d = 18\ \eta_c\ h/(\rho1-\ \rho2)gt$$

(where:

h = displacement (cm)
t = time (s)
g = gravitational constant
$\rho1 - \rho2$ = differential density between dispersed particles and the liquid (g/cm$^{-3}$)
d = diameter of particle ($\mu$m)
$\eta_c$ = viscosity of continuous phase (poise)).

Another formula used to calculate the distance that particles with size ranging from 0.1-100 $\mu$m would travel is as follows:

$$v_s = [d^2(\rho_s - \rho_0)g]\ /\ [18\ \eta_0]$$

(where:'

$v_s$ is the settling velocity in cm/s
d = Particle diameter = 100 $\mu$m (100 x 10-4 cm)

$\eta_o$ = viscosity of 10% sucrose solution = 1.167 cP
$\rho_o$ = density of 10% sucrose solution = 1.036 g/cm$^3$
$\rho_s$ = density of whey protein particles = 1.050 g/cm$^3$).

Various materials may be used in the dilution buffer to increase the viscosity of the diluted sample to a suitable level, without significantly affecting the protein aggregates (other than affecting their sedimentation rate). Suitable materials include sugars, for example, sucrose, lactose, or glucose. In the case of sucrose, a suitable concentration for use in carrying out turbidimetric measurements on samples containing protein aggregate particles having a size less than 50 $\mu$m, would generally be of the order of from 5 to 20 % w/v, preferably from 5 to 10 % w/v.

Using the second formula above a 100 $\mu$m particle in a 10% sucrose solution would be estimated to sediment at a rate of 0.003924 cm in 1 minute.

In practice, the method of the present invention will generally involve a preliminary calibration step to provide said previously established turbidity measurement limits corresponding to the desired average protein aggregate size range, and said previously established SH-group measurement limits corresponding to the desired degree of denaturation using a heat treatment processing of a representative sample of the protein solution to be processed. Normally such a calibration step would be carried out using a laboratory scale heat treatment processing of the protein solution, with turbidity and reactive -SH group measurements being obtained across an extended range of progressively incrementing heat treatment intensities, as well as (direct) particle size measurements being obtained across said range. The particle size measurements may be obtained by any suitable method known in the art. In practice these tend to be relatively cumbersome and time-consuming - and therefore quite unsuitable for use directly in a commercial production process. These drawbacks can, though, be tolerated in a laboratory scale calibration procedure. One convenient technique which can be mentioned in this connection, is laser diffraction analysis, which is based on different degrees of diffraction associated with different particle sizes, and is well known for the measurement of particle size of inter alia, protein particles in solution, with suitable instruments being readily available commercially.

As further discussed hereinbelow, the present Inventor has found that when more or less highly accurate turbidity measurements, in particular nephelometric turbidity measurements, are obtained, then a substantially linear relationship is found between average particle size, where "average" means that 50% (by volume) of a population of particles is below the given diameter, and the turbidity measurement level, whereby a good indication of the protein aggregate particle size can be obtained quickly and easily from a relatively simple turbidity measurement, in particular a nephelometric turbidity measurement, without the need for carrying out relatively cumbersome and time consuming direct measurements of the particle size.

By extending said range into a region of progressively incrementing heat treatment intensities in which gelation and/or excessive aggregation takes place - which of course would be quite unacceptable in a production process, it is possible to identify turbidity and reactive -SH group measurement levels, which are associated with heat treatment intensities in close proximity to heat treatment intensities at which gelation and/or excessive aggregation takes place, thereby providing advance warning of these.

It will be appreciated that the range of desired particle size and functionality properties, can vary according to the requirements of the user of the protein aggregate product. Also the sensitivity of the aggregation process to changes in heat treatment intensity, can vary significantly from one protein solution to another. By way of illustration it may be noted that in the case of a heat denatured whey protein aggregate product intended for use as a sodium caseinate replacement, this would desirably have a particle size range such that at least 50% of the particles (by volume) have a particle size of from 0.1 to 50 $\mu$m. (In more detail a particle size range of 0-1-1 $\mu$m would be useful for sodium caseinate replacement, in acidic drinks such as fruit drinks (smoothies), and fat replacement in pasteurised skim milk; a particle size range of 1-10 $\mu$m for sodium caseinate replacement, fat replacement in yoghurts, viscosity increase in health drinks, texturisation in health bars; and a particle size range of 10-50 $\mu$m for sodium caseinate replacement, fat replacement in mayonnaises, as a gelling agent in acidic desserts and in cold meat analogues, and for texturisation in health bars.)

When using a protein concentration of 20% w/v with a pH of 7, at a flow rate of 1000 liters/hour and a heat treatment time of 1 minute, the temperature should generally be within the range of from 68 to 72°C. In view of the fact that the onset of gelation of such a protein solution would generally occur at about 74°C, it can be seen that there is only a margin of about 2°C between the upper limit of the desired operating temperature and the onset of gelation. In this case a suitable temperature incrementation interval would generally be from 1 to 2°C, conveniently about 1°C.

In another aspect the present invention provides a method of manufacturing a heat treatment denatured protein aggregate product with a desired particle size and functionality, comprising the steps of:

a) providing a protein solution having a pH in the range 6 to 9 at a protein concentration up to 30 protein w/w. e.g. up to 20% protein w/w; and
b) heat treatment of said solution at a heat treatment intensity corresponding to a period of time at an elevated temperature,

wherein said heat treatment intensity is set with the aid of a controlling method of the present invention, in which the heat treatment intensity is progressively incremented until both denaturation degree and turbidity measurements are within the desired range corresponding to the desired functionality and particle size.

The present invention may be used in relation to processes and products based on a variety of different proteins, such as globular or globulin proteins, preferably globulin proteins, especially globulin proteins which are used in the food industry. Particular proteins which may be mentioned in this connection include whey proteins, egg white or albumin, whole egg, and soy protein. Soy protein is sometimes referred to as soya protein. Other proteins include seed proteins. Other proteins include pea proteins, jatropha bean proteins, wheat protein and barley protein.

In a further aspect the current invention also provides a method for monitoring the degree of protein denaturation and aggregation during the course of a heat treatment process. This can be carried out as often as is desired, for example every few minutes, but in practice we have found that it is generally sufficient to do this at intervals of the order of 1 to 4 hours.

In yet another aspect the current invention provides a heat denatured protein aggregate of desired particle size and functionality, obtained with the aid of the control method of the present invention.

Further preferred features and advantages of the present invention will appear from the following detailed description given by way of example, with reference to the accompanying drawings in which:

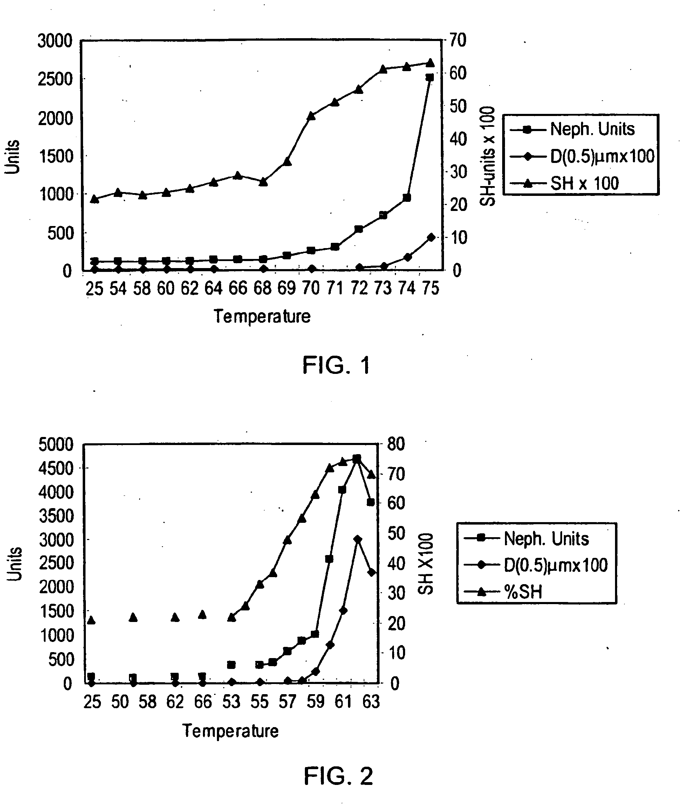

Figs 1 and 2 show graphs of measurements obtained from laboratory scale trials of heat treatment of liquid WPC70 protein solution and egg white protein solution at 20% and 10% TS, respectively.

**Example 1 Denaturation of WPC70 Protein Solution at 20% TS**

**A. Laboratory Calibration Trial**

The pH of 200 ml of liquid WPC70 aqueous Protein Solution at 25% w/v TS was adjusted to pH 6.5 and was heated while stirring in a waterbath set at 75°C. [WPC70 is concentrated whey protein consisting of 70% protein, 15-20% lactose, 3-5% fat and 3-5% minerals.] Two x 200 $\mu$l samples was collected after each 1°C increment in temperature and diluted in "turbidity" dilution buffer (further described hereinbelow) and -SH group chemical reaction system as described below. The diluted samples were analysed for turbidity and free sulfhydryl groups as further described hereinbelow. After each 1°C temperature increment, a 5 ml sample was diluted 3 fold in turbidity buffer and put on ice for particle size analysis. As an alternative, the 5 mL sample may be stored on ice for later particle size analysis, which is generally carried out within 1 hour. The duration of sample analysis for turbidity and reactive SH-group measurements was not longer than 1-2 minutes.

**Measurement of turbidity.**

The turbidity meter used was a Ratio White Light Nephelometer (operable in ratio and non-ratio modes). This equipment uses a nephelometric detector at 90° to the incident light as the primary detector, and includes other detectors to minimize interference. In addition this equipment is portable and of a relatively small size which can easily be placed near the site where processing takes place.

**Method**

200 $\mu$l of heated protein solution was added to 30 ml of "turbidity" dilution buffer having the following composition: 10% w/v sucrose, 1% w/v NaCl and 0.1% w/v Tris, pH 6.5. In an alternative "turbidity" dilution buffer the% w/v NaCl may be omitted. The diluted sample was introduced into a 30 cm long glass cuvette for analysis in the turbidity-meter. The glass cuvette was capped and inverted twice to mix the solution and the turbidity was measured immediately. A non-heat treated whey sample was used as control.

**Measurement of sulfhydryl groups**

The equipment used was a portable colorimeter which can be handheld and easily transported to the site where processing takes place.

**Method**

200-$\mu$l of heated protein solution was added to 30 ml "sulfhydryl buffer" (-SH group chemical reaction-system) having the following composition 0.086M Tris, 4mM EDTA, 0.09M Glycine, 3 $\mu$m DTNB (5, 5'-dithiobis(2-nitrobenzoic acid)). The diluted sample was introduced into a glass cuvette for the photometer. The glass cuvette was capped and inverted twice to mix the solution and the absorbance was measured immediately at 412 nm. Alternatively, the absorbance may be measured after a short period of time, e.g. within 5 mintes, generally within 1 minute. A non-heat treated whey sample was used as a control as before.

The "total" sulfhydryl groups of the non-heat treated WPC65 whey protein sample was determined beforehand at the same protein concentration and the same "sulfhydryl buffer" as above containing urea and SDS to fully denature the protein. This value was taken as 100 % denaturation and the percentage available sulfhydryl groups was calculated using the "total" SH-groups as 100% denaturation value. Alternatively, a standard curve was established beforehand by heat treating WPC70 at 25% TS at pH 6.5 at increasing temperatures for 1 minute to calculate the % denaturation. In this alternative, the standard for 100% denaturation (total exposure of buried SH-groups) was WPC70 heated for 1 minute at 79°C at 25% TS, dissolved in SH-buffer containing 6M urea and 0.5% SDS. The percentage available sulfhydryl groups of the test samples was derived from the preset standard curve. In this trial the absorbance reading obtained at 412 nm for total SH-groups was equal to 1, which when multiplied by 100, gave 100 absorbance units. Using this value, the percentage denaturation of a given sample was calculated as:

```
(Absorbance of test sample/absorbance of sample with "total"

SH-groups) x 100
```

If required, the micromoles of SH / gram of protein was calculated using a molar extinctions coefficient of $1.36 \times 10^4 M^{-1} cm^{-1}$ after the measurements.

### Particle size analysis

The samples collected in turbidity buffer during the different heating steps were analysed afterwards (typically within 1 hour) for particle size distribution by laser diffraction analysis using a Malvern Mastersizer 2000 (available from Malvern Ltd.) at a refractive index of 1.47 and obscuration value of 6.8%.

### Results

The results of the various above described measurements were plotted graphically in Figure 1. The results indicated a sharp rise in turbidity at 73°C, 74°C and 75°C (Fig. 1). Gelation occurred at 76°C at which point it was of course not possible to obtain any measurement.

The % of reactive SH-groups already started to increase at 68°C and reached a maximum at 75°C indicating unfolding of the tertiary structure of the protein. A sharp increase in absorbance at 64 and 65°C indicated the formation of aggregates. It also served as an advance warning that gelation was imminent.

The values obtained and shown in the graph, represent the difference in properties between whey protein at room temperature (non-heat treated) and at each indicated temperature increment. Values for turbidity and particle size (x100) are depicted against the left hand y-axis scale, and % reactive SH groups are depicted against the right hand y-axis scale.

The average particle size d(0.5), which is represented in the graph in ($\mu$m x100), shows a gradual increase corresponding with increase in turbidity, reaching a maximum of 5.2 $\mu$m. Gelation started at 76°C, at which point it was impossible to take samples for particle size measurements.

### B. Establishing Heat treatment Temperature for Pilot Scale Trial Process for Production of Heat treated WPC70 from 20% TS Solution

The starting material for the trial was 1 ton liquid WPC70 obtained after ultrafiltration of acid whey from casein manufacture. The total solids (TS) content was 20%. The pH was adjusted to 6.5 with 30% sodium hydroxide.

The liquid was passed through a heat exchanger at a flow rate of 1500 liter/hour. The temperature was initially set to 70°C at a holding time of 1 minute at this temperature, before it was rapidly cooled down to 10°C. This was regarded as the "preheating step".

Although the gelation temperature had been determined in the laboratory trial to be 76°C, the validity of this in a pilot scale manufacturing process still had to confirmed. Therefore the liquid was preheated to 70°C after which the treatment temperature was progressively increased to a series of higher temperatures at intervals of 1°C. A sample was collected immediately after cooling at every incremental increase in temperature and turbidity and reactive sulfhydryl group measurements carried out as before.

## Results

The results indicated a sharp rise in turbidity at 72°C and 73°C, similar to that of Fig. 1, indicating that gelation could be imminent. For the purposes of confirmation of the validity of the method of the present invention, the heat treatment temperature was further increased until the very first sign of gelation which occurred at 74°C. The heating process was then immediately stopped and the processing equipment was flushed with water to remove any gelled material.

As the maximum denaturation temperature for these processing conditions was confirmed to be 73°C, the heat processing could be repeated and the rest of the 1 ton liquid WPC70 was heat treated at 73°C.

The heat treated denatured material was collected in a cooled storage vessel at 10°C. The heat treated liquid whey was spray dried thereafter at the same 20% TS - without the need for any prior evaporation. The spray dried powder was analysed for particle size (after suspension in water) as well as for reactive SH-groups.

### Example 2 Denaturation of Egg white Protein Solution at 10% TS

### A. Laboratory Calibration Trial

The process was repeated as in example 1, except that the liquid consisted of 8% egg white, 1% sugar and 1% NaCl, with total solids (TS) of 10% and the pH was not adjusted since the pH of egg white is normally around 8. Six hundred microliters (600μl) thereof was added to the turbidity buffer (pH 8) and 600 μl was used for measurement of SH-groups (since only a lower degree of dilution was required). For particle size analysis, 5 ml samples were diluted two fold in turbidity buffer and put on ice. After the laboratory trial, a graph was drawn of turbidity, SH-groups and particle size as shown in Fig 2.

### Results

As with Fig. 1, the values obtained and shown in the graph, represent the difference in properties between whey protein at room temperature (non-heat treated) and at each indicated temperature increment. Values for turbidity and particle size (x100) are depicted against the left hand y-axis scale, and % reactive SH-groups are depicted against the right hand y-axis scale.

In the Fig.2 graph the reactive SH-groups level starts to increase significantly at about 54°C and turbidity starts to increase significantly at 59°C. The reactive SH-groups level starts to decline after 61°C which indicates gelling due to the formation of intermolecular disulfide bonds. The turbidity reading reaches a maximum at 62 °C and the particles reach an average size of 30 μm (Figure 2)). At 63°C the turbidity declines since the particles larger than 50 μm sinks to the bottom of the cuvette. A larger concentration of larger aggregates is formed compared to example 1, since more protein molecules have time to unfold when heated at a more dilute concentration before gelation sets in as indicated by 72% SH groups compared to 63% SH groups in example 1. The larger average particle size is indicated by a maximum turbidity of 4500 in Fig.2 compared to only 810 in Fig.1.

### B. Establishing Beat treatment Temperature for Pilot Scale Trial Process for Production of Heat treated Egg white at 10% TS Solution

5000 kg of liquid egg white containing 1% sugar and 1% salt, at 10% w/v TS, was passed through a heat exchanger at 1000 liter/hour at a holding (heat treatment) time of 1 minute. Since the laboratory trials gave an indication that the precipitation temperature could be near 63°C, the heat exchanger was initially set for heating the process liquid to 56°C. The temperature was progressively incremented by intervals of 1°C, and turbidity and SH-groups were measured at each incremental increase in temperature and the values compared to that in the graph of Fig. 2. At a temperature of 60°C, the turbidity value already reached 4000 NTU and when compared to the Fig.2 graph, this would result in a particle size of approximately 30 μm. At 60°C, the denaturation degree was 72%. Since both denaturation degree and turbidity value were satisfactory at 60°C, the temperature was not increased any further and the rest of the liquid whey was heat treated at this temperature. The cooled product was collected in holding tanks while under agitation, evaporated to 25% TS and spray dried. The powder was analysed for particle size (after suspension in water) as well as available SH-groups.

### Results

The differences between the properties of the final spray dried products obtained in Examples 1 and 2 is summarized in the following Table.

**Table 1. Comparison of particle size and reactive SH-groups between spray-dried powder of example 1 and 2.**

| | WPC70, 20% TS (Example 1) | Egg white, 10% TS (Example 2) |
|---|---|---|
| Average Particle size (μm) | 4.57 | 19.20 |
| Reactive SH-groups (%) | 65 | 72 |

These results show the following features of the control - method of the present invention:

The turbidity value correlates with average particle size in heated protein-solutions,
The SH-group value gives a reproducible indication of the denaturation degree of proteins.

## Claims

1.  A method for monitoring the degree of protein denaturation and aggregation during the course of a heat treatment process comprising the steps of:

    heating an aqueous protein-containing fluid to a temperature corresponding to a heat treatment intensity in proximity to a previously established expected heat treatment intensity;
    collecting a sample of the heated protein solution;
    diluting said sample(s) in a buffer formulated so that:

    the pH in said sample is substantially unchanged,
    the ionic conditions in said sample are substantially unchanged, and
    the viscosity of said sample is at least substantially maintained, all relative to the undiluted sample,
    measuring the turbidity of said sample relative to an untreated control sample;
    comparing the turbidity measurement obtained with previously established turbidity measurement limits corresponding to a desired average protein aggregate size range;
    collecting a sample of the heated protein solution;
    mixing said sample(s) with a chemical -SH group reaction measurement system; and
    comparing the SH-group measurement obtained with previously established SH-group measurement limits corresponding to a desired degree of denaturation.

2.  The method of claim 1 wherein the protein is a globulin or globular protein.

3.  The method of claim 1 or claim 2 wherein the protein is a whey protein, egg white or albumin, whole egg, or soy protein.

4.  The method of any one preceding claim wherein the aqueous protein-containing fluid comprises a protein concentration of from 1 to 28% w/v.

5.  The method of any one preceding claim wherein the aqueous protein-containing fluid comprises a protein concentration of more than 15% w/v.

6.  A method of controlling heat treatment intensity for aqueous protein-containing fluids in which the protein is substantially completely dissolved so as to produce heat denatured protein aggregates of desired particle size and functionality comprising the steps of:

    monitoring the degree of protein denaturation and aggregation during the course of a heat treatment process as defined in any one of claims 1 to 5; and
    in the event of any deviations from the desired particle size or degree of denaturation, adjusting the heat treatment intensity so as to conform these to the desired value(s).

7.  The method of claim 6 wherein the heat treatment intensity is adjusted so as to conform the particle size and degree of denaturation to the desired value(s) in the event of any deviation of the particle size and degree of denaturation from the desired values.

8. The method of claim 6 or claim 7 when used to control heat treatment intensity in relation to establishing a heat treatment intensity for a new product; establishing a heat treatment intensity for a process for an existing product when a new batch of starting material is used; or for monitoring an existing process.

9. The method of any one of claims 6 to 8, wherein the aqueous protein-containing fluid is initially heated to a temperature below a previously established expected heat treatment intensity, and the method includes the steps of:

incrementing the adjustment to the heat treatment intensity,
and repeating the preceding steps for each heat treatment intensity increment; and
discontinuing said heat treatment intensity incrementation when said comparisons indicate that both denaturation degree and turbidity measurements are within the desired range.

10. The method of claim 9 wherein the fluid is initially heated to a temperature less than or equal to 5 °C below a previously established expected heat treatment intensity.

11. The method of claim 9 or claim 10 wherein said incrementing of said heat treatment intensity serves to increase the temperature of the protein solution of increments of about 0.5 to 1 °C.

12. The method of any one of claims 6 to 11 wherein the heat treatment intensity, if adjusted, is changed by adjustment of the energy input to the heater, modulation of any heat exchange or heat transfer system used to transfer heat from the heater to the protein solution, or changing the duration of the heat treatment.

13. The method of any one of claims 6 to 12 when used to control a continuous flow production process or a batch process.

14. A method of manufacturing a heat treatment denatured protein aggregate product with a desired particle size and functionality, comprising the steps of:

a) providing a protein solution having a pH in the range 6 to 9 at a protein concentration up to 30 protein w/w; and
b) heat treatment of said solution at a heat treatment intensity corresponding to a period of time at an elevated temperature,
wherein said heat treatment intensity is set with the aid of a controlling method as defined in any of claims 6 to 13, in which the heat treatment intensity is progressively incremented until both denaturation degree and turbidity measurements are within the desired range corresponding to the desired functionality and particle size.

15. The method of claim 14 wherein said protein concentration is up 20% w/w.

**Patentansprüche**

1. Verfahren zum Überwachen des Proteindenaturierungs- und -aggregationsgrads im Laufe eines Hitzebehandlungsvorgangs, umfassend die Schritte des:

Erhitzens eines wässrigen, proteinhaltigen Fluids auf eine Temperatur, die einer Hitzebehandlungsintensität in der Nähe einer vorher bestimmten erwarteten Hitzebehandlungsintensität entspricht;
Aufnehmens einer Probe der erhitzten Proteinlösung;
Verdünnens der Probe(n) in einem Puffer, der so formuliert ist, dass der pH-Wert der Probe im Wesentlichen unverändert bleibt, die ionischen Bedingungen in der Probe im Wesentlichen unverändert bleiben und die Viskosität der Probe mindestens im Wesentlichen beibehalten wird, wobei alles im Vergleich zu der unverdünnten Probe ist,
Messens der Trübe der Probe im Vergleich zu einer unbehandelten Kontrollprobe;
Vergleichens des erhaltenen Trübemesswerts mit vorher bestimmten Trübemesswertgrenzen, die einem erwünschten durchschnittlichen Proteinaggregatgrößenbereich entsprechen;
Aufnehmens einer Probe der erhitzen Proteinlösung;
Mischens der Probe(n) mit einem chemischen -SH-Gruppenreaktionsmesssystem;
und
Vergleichens des erhaltenen SH-Gruppenmesswerts mit vorher bestimmten SH-Gruppenmesswertgrenzen, die einem erwünschten Denaturierungsgrad entsprechen.

**2.** Verfahren nach Anspruch 1, wobei das Protein ein Globulin oder globuläres Protein ist.

**3.** Verfahren nach Anspruch 1 oder Anspruch 2, wobei das Protein ein Molkeprodukt, Eiweiß oder Albumin, Vollei oder Sojaprotein ist.

**4.** Verfahren nach einem der vorhergehenden Ansprüche, wobei das wässrige proteinhaltige Fluid eine Proteinkonzentration von 1 bis 28 Gew./Vol.-% umfasst.

**5.** Verfahren nach einem der vorhergehenden Ansprüche, wobei das wässrige proteinhaltige Fluid eine Proteinkonzentration von mehr als 15 Gew./Vol.-% umfasst.

**6.** Verfahren zum Regulieren der Hitzebehandlungsintensität für wässrige proteinhaltige Fluide, wobei das Protein im Wesentlichen vollständig gelöst ist, um hitzedenaturierte Proteinaggregate erwünschter Teilchengröße und Funktionalität herzustellen, umfassend die Schritte des:

Überwachens des Proteindenaturierungs- und -aggregationsgrads im Laufe eines Hitzebehandlungsvorgangs, wie in einem der Ansprüche 1 bis 5 definiert; und
im Falle irgendwelcher Abweichungen von der erwünschten Teilchengröße oder dem erwünschten Denaturierungsgrad, Einstellens der Hitzebehandlungsintensität, damit diese dem erwünschten Wert/den erwünschten Werten entspricht.

**7.** Verfahren nach Anspruch 6, wobei die Hitzebehandlungsintensität so eingestellt wird, dass die Teilchengröße und der Denaturierungsgrad dem erwünschten Wert/den erwünschten Werten im Falle irgendeiner Abweichung der Teilchengröße und des Denaturierungsgrads von den erwünschten Werten entsprechen.

**8.** Verfahren nach Anspruch 6 oder Anspruch 7, wird es zum Regulieren der Hitzebehandlungsintensität mit Bezug auf das Bestimmen einer Hitzebehandlungsintensität für ein neues Produkt; Bestimmen einer Hitzebehandlungsintensität für ein Verfahren für ein existierendes Produkt, wenn eine neue Charge Ausgangsmaterial verwendet wird; oder für das Überwachen eines existierenden Verfahrens eingesetzt.

**9.** Verfahren nach einem der Ansprüche 6 bis 8, wobei das wässrige proteinhaltige Fluid anfänglich auf eine Temperatur unterhalb einer vorherbestimmten erwarteten Hitzebehandlungsintensität erhitzt wird und das Verfahren die Schritte umfasst des:

Erhöhens des Einstellens der Hitzebehandlungsintensität und Wiederholens der vorhergehenden Schritte bei jeder Erhöhung der Hitzebehandlungsintensitäts; und
Aufhörens der Erhöhung der Hitzebehandlungsintensität, wenn die Vergleiche anzeigen, dass sowohl der Denaturierungsgrad als auch die Trübemesswerte innerhalb des erwünschten Bereichs liegen.

**10.** Verfahren nach Anspruch 9, wobei das Fluid anfänglich auf eine Temperatur von weniger oder gleich 5 °C unterhalb einer vorher bestimmten erwarteten Hitzebehandlungsintensität erhitzt wird.

**11.** Verfahren nach Anspruch 9 oder Anspruch 10, wobei das Erhöhen der Hitzebehandlungsintensität dazu dient, die Temperatur der Proteinlösung mit Erhöhungen von etwa 0,5 bis 1 °C zu erhöhen.

**12.** Verfahren nach einem der Ansprüche 6 bis 11, wobei die Hitzebehandlungsintensität, wird sie eingestellt, durch Einstellen des Energieeintrags in die Heizvorrichtung, Modulieren irgend eines Wärmeaustausch- oder Wärmeübertragungssystems, das zum Übertragen von Hitze von der Heizvorrichtung zu der Proteinlösung verwendet wird, oder Ändern der Dauer der Hitzebehandlung geändert wird.

**13.** Verfahren nach einem der Ansprüche 6 bis 12, wird es zum Regulieren eines Fließfertigungsprozesses oder eines Batchprozesses eingesetzt.

**14.** Verfahren zum Herstellen eines durch Hitzebehandlung denaturierten Proteinaggregatprodukts mit einer erwünschten Teilchengröße und Funktionalität, umfassend die Schritte des:

a) Bereitstellens einer Proteinlösung, die einen pH-Wert im Bereich von 6 bis 9 bei einer Proteinkonzentration von bis zu 30 Gew.-% Protein aufweist; und

b) Hitzebehandelns der Lösung mit einer Hitzebehandlungsintensität die einer Zeitspanne bei erhöhter Temperatur entspricht,
wobei die Hitzebehandlungsintensität mit Hilfe eines Regulierverfahrens wie in einem der Ansprüche 6 bis 13 definiert, festgelegt wird, wobei die Hitzebehandlungsintensität zunehmend erhöht wird, bis sowohl der Denaturierungsgradmesswert als auch der Trübemesswert innerhalb des erwünschten Bereichs liegen, der der erwünschten Funktionalität und Teilchengröße entspricht.

**15.** Verfahren nach Anspruch 14, wobei die Proteinkonzentration bis zu 20 Gew.-% beträgt.

**Revendications**

**1.** Méthode de contrôle du degré de dénaturation et d'agrégation de protéine au cours d'un procédé de traitement thermique, comprenant les étapes consistant à:

chauffer un fluide aqueux contenant une protéine à une température correspondant à une intensité de traitement thermique proche d'une intensité de traitement thermique prévue établie précédemment;
recueillir un échantillon de la solution de protéine chauffée;
diluer ledit/lesdits échantillon(s) dans un tampon formulé de sorte que le pH dudit échantillon est sensiblement inchangé, les conditions ioniques dans ledit échantillon sont sensiblement inchangées et la viscosité dudit échantillon est au moins sensiblement maintenue, tous par rapport à l'échantillon non dilué,
mesurer le trouble dudit échantillon par rapport à un échantillon témoin non traité;
comparer la mesure de trouble obtenue à des limites de mesure de trouble établies précédemment correspondant à une plage de taille moyenne désirée d'agrégat de protéine;
recueillir un échantillon de la solution de protéine chauffée;
mélanger ledit/lesdits échantillon(s) avec un système de mesure de réaction chimique de groupe -SH; et
comparer la mesure du groupe SH obtenue à des limites de mesure de groupe SH établies précédemment correspondant à un degré désiré de dénaturation.

**2.** Méthode selon la revendication 1, dans laquelle la protéine est une globuline ou une protéine globulaire.

**3.** Méthode selon la revendication 1 ou la revendication 2, dans laquelle la protéine est une protéine de lactosérum, de blanc d'oeuf ou d'albumine, de la protéine d'oeuf entier ou de soja.

**4.** Méthode selon l'une quelconque des revendications précédentes, dans laquelle le fluide aqueux contenant une protéine comprend une concentration de protéine de 1 à 28% p/v.

**5.** Méthode selon l'une quelconque des revendications précédentes, dans laquelle le fluide aqueux contenant une protéine comprend une concentration de protéine de plus de 15% p/v.

**6.** Méthode de contrôle de l'intensité d'un traitement thermique pour des fluides aqueux contenant une protéine dans lesquels la protéine est sensiblement complètement dissoute de manière à produire des agrégats de protéine dénaturée par la chaleur de la taille de particules et de la fonctionnalité désirées, comprenant les étapes consistant à:

contrôler le degré de dénaturation et d'agrégation d'une protéine au cours d'un procédé de traitement thermique selon l'une quelconque des revendications 1 à 5; et
en cas de déviation quelconque par rapport à la taille de particules ou au degré de dénaturation désirés, ajuster l'intensité du traitement thermique pour les rendre conformes à la/aux valeur(s) désirée(s).

**7.** Méthode selon la revendication 6, dans laquelle l'intensité du traitement thermique est ajustée pour rendre la taille de particules et le degré de dénaturation conformes à la/aux valeur(s) désirée(s) en cas de déviation quelconque de la taille de particules et du degré de dénaturation par rapport aux valeurs désirées.

**8.** Méthode selon la revendication 6 ou la revendication 7 lorsque utilisée pour contrôler l'intensité d'un traitement thermique se rapportant à l'établissement de l'intensité d'un traitement thermique pour un nouveau produit; à l'établissement de l'intensité d'un traitement thermique pour un procédé sur un produit existant lorsqu'un nouveau lot de matière de départ est utilisé ou bien pour contrôler un procédé existant.

**9.** Méthode selon l'une quelconque des revendications 6 à 8, dans laquelle le fluide aqueux contenant une protéine est chauffé au départ à une température inférieure à une intensité de traitement thermique prévue établie précédemment et la méthode comprend les étapes consistant à:

incrémenter l'ajustement à l'intensité de traitement thermique et répéter les étapes précédentes pour chaque incrément d'intensité de traitement thermique; et
arrêter ladite incrémentation de l'intensité de traitement thermique lorsque lesdites comparaisons indiquent que les mesures du degré de dénaturation et de trouble sont dans la plage désirée.

**10.** Méthode selon la revendication 9, dans laquelle le fluide est chauffé au départ à une température inférieure ou égale à 5°C de moins qu'une intensité de traitement thermique prévue établie précédemment.

**11.** Méthode selon la revendication 9 ou la revendication 10, dans laquelle ladite incrémentation de ladite intensité de traitement thermique sert à augmenter la température de la solution de protéine en incréments d'environ 0,5 à 1°C.

**12.** Méthode selon l'une quelconque des revendications 6 à 11, dans laquelle l'intensité de traitement thermique, si ajustée, est changée par l'ajustement de l'entrée d'énergie dans l'appareil chauffant, la modulation de tout système d'échange de chaleur ou de transfert de chaleur utilisé pour transférer de la chaleur de l'appareil chauffant à la solution de protéine ou en changeant la durée du traitement thermique.

**13.** Méthode selon l'une quelconque des revendications 6 à 12 lorsque utilisée pour contrôler un procédé de production en continu ou un procédé discontinu.

**14.** Méthode de fabrication d'un produit d'agrégat de protéine dénaturée par traitement thermique d'une taille de particules et d'une fonctionnalité désirées, comprenant les étapes consistant à:

a) fournir une solution de protéine ayant un pH dans la plage de 6 à 9 à une concentration de protéine de jusqu'à 30% de protéine p/p; et
b) traiter par la chaleur ladite solution à une intensité de traitement thermique correspondant à une période de temps à une température élevée,
où ladite intensité de traitement thermique est réglée à l'aide d'une méthode de contrôle selon l'une quelconque des revendications 6 à 13, où l'intensité de traitement thermique est progressivement incrémentée jusqu'à ce que les mesures du degré de dénaturation et de trouble soient toutes les deux dans la plage désirée correspondant à la fonctionnalité et à la taille de particules désirées.

**15.** Méthode selon la revendication 14, dans laquelle ladite concentration de protéine est de jusqu'à 20% p/p.

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6767575 B

- WO 0249442 A

**Non-patent literature cited in the description**

- **SHIMADA, K. ; CHEFTEL, J. C.** Determination of sulfhydryl groups and disulfide bonds in heat-induced gels of soy protein isolate. *Journal of Agriculture and Food Chemistry,* 1988, vol. 36, 147-153